# EUROPEAN PATENT APPLICATION

(11) **EP 3 151 508 A1**
(43) Date of publication of application: **05.04.2017**
(21) Application number: 16187580.2
(22) Date of filing: 07.09.2016
(51) Int. Cl.: H04L 29/06, G06F 21/62

(54) **MANAGEMENT SYSTEM, COMMUNICATION SYSTEM, AND TRANSMISSION CONTROL METHOD**

(30) Priority: 30.09.2015 JP 2015193433
(71) Applicant: Ricoh Company, Ltd., Tokyo 143-8555 (JP)
(72) Inventor: HINOHARA, Hiroshi, Tokyo, 143-8555 (JP); UMEHARA, Naoki, Tokyo, 143-8555 (JP); MIYAMOTO, Atsushi, Tokyo, 143-8555 (JP); HORIUCHI, Takeshi, Tokyo, 143-8555 (JP); SONEDA, Takuya, Tokyo, 143-8555 (JP)
(74) Representative: Schwabe - Sandmair - Marx

(57) **Abstract**

A management system (50), a communication system (1), and a transmission control method. The management system (50) includes a receiver (51, 501, 509) configured to receive information of a predetermined attribute, and a controller (53, 54, 501) configured to control the information received by the receiver (51, 501, 509) to be sent to a communication terminal (10) that is authenticated by a client when the predetermined attribute is associated with the client. The communication system (1) includes an authentication system (40) and the management system (50). The authentication system (40) includes an acceptance unit (41, 501, 509) configured to accept an authentication request from a client, and an authentication processing unit (43, 501) configured to authenticate the client. In the communication system (1), the authentication system (40) and the management system (50) communicate with each other through a communication network.

## Description

### BACKGROUND

### Technical Field

Embodiments of the present invention relate to a management system, a communication system, and a transmission control method.

### Background Art

In recent years, communication systems for performing phone conversation or video conference through the communication network such as the Internet or private lines are widely used due to increasing demands for reduction in cost and time. When communication among a plurality of communication terminals is started, such communication systems exchange contents of data such as image data and audio data with each other. Accordingly, the communication among the participants who use the communication terminals is realized. Moreover, as a method of sending contents of data from one communication terminal to some other communication terminals, the publish-subscribe model is known in the art (hereinafter, the publish-subscribe model may be referred to simply as "pub/sub model").

For example, a remote monitoring system that operates with a first data processing system and a second data processing system is known in the art. Such a remote monitoring system stores the log data, which is generated by an application program, in the memory of the first data processing system that stores the application program. Subsequently, the remote monitoring system captures the newly stored log data, which is to be processed by a publisher program that is executed in the first data processing system, and repeatedly sends the captured log data to the second data processing system as a series of publication. Note also that the second data processing system is provided that a publish/subscribe and matching engine.

In the pub/sub model, when a client accesses a server, the server sends the information requested by the client to the client. However, some of the information is obtainable by one client but not obtainable by another client. When a plurality of clients access the server, it becomes difficult for the server to appropriately distribute the information to each of the clients.

### SUMMARY

Embodiments of the present invention described herein provide a management system, a communication system, and a transmission control method. The management system includes a receiver configured to receive information of a predetermined attribute, and a controller configured to control the information received by the receiver to be sent to a communication terminal that is authenticated by a client when the predetermined attribute is associated with the client. The communication system includes an authentication system and the management system. The authentication system includes an acceptance unit configured to accept an authentication request from a client, and an authentication processing unit configured to authenticate the client. In the communication system, the authentication system and the management system communicate with each other through a communication network. The transmission control method includes accepting an authentication request from a client, authenticating the client, receiving information of a predetermined attribute; and controlling the information received by the receiving to be sent to a communication terminal that is authenticated with a client by the authenticating when the predetermined attribute is associated with the client.

According to one aspect of the present invention, even when a plurality of clients access a management system, the server can appropriately distribute the information, which is obtainable by one client but not obtainable by another client, to each of the clients.

### BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.
FIG. 1 is a schematic diagram illustrating a configuration of a communication system according to an embodiment of the present invention.
FIG. 2 is a schematic block diagram illustrating a hardware configuration of a communication terminal according to an embodiment of the present invention.
FIG. 3 is a schematic block diagram illustrating a hardware configuration of a management system according to an embodiment of the present invention.
FIG. 4 is a schematic block diagram illustrating a software configuration of a communication terminal according to an embodiment of the present invention.
FIG. 5 is a functional block diagram of a communication terminal, an authentication server, and a management system, according to an embodiment of the present invention.
FIG. 6A, FIG. 6B, FIG. 6C, and FIG. 6D are diagrams each illustrating a data structure of a management table managed by an authentication server, according to an embodiment of the present invention.
FIG. 7A, FIG. 7B, FIG. 7C, and FIG. 7D are diagrams each illustrating a data structure of a management table managed by a management system, according to an embodiment of the present invention.
FIG. 8 is a sequence diagram illustrating authentication processes according to an embodiment of the present invention.
FIG. 9 is a sequence diagram illustrating the processes of publishing and subscribing to a message, according to an embodiment of the present invention.
FIG. 10 is a flowchart of the processes of determining whether or not each communication terminal has the authority to subscribe to a message, according to an embodiment of the present invention.
FIG. 11 is a flowchart of the processes of determining whether or not each communication terminal has the authority to publish a message, according to an embodiment of the present invention.
FIG. 12 is a schematic diagram illustrating a configuration of a communication system according to a modification of an embodiment of the present invention.

The accompanying drawings are intended to depict exemplary embodiments of the present disclosure and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

In the following description, an embodiment of the present invention is described with reference to the drawings.

### «Schematic Configuration of Communication System»

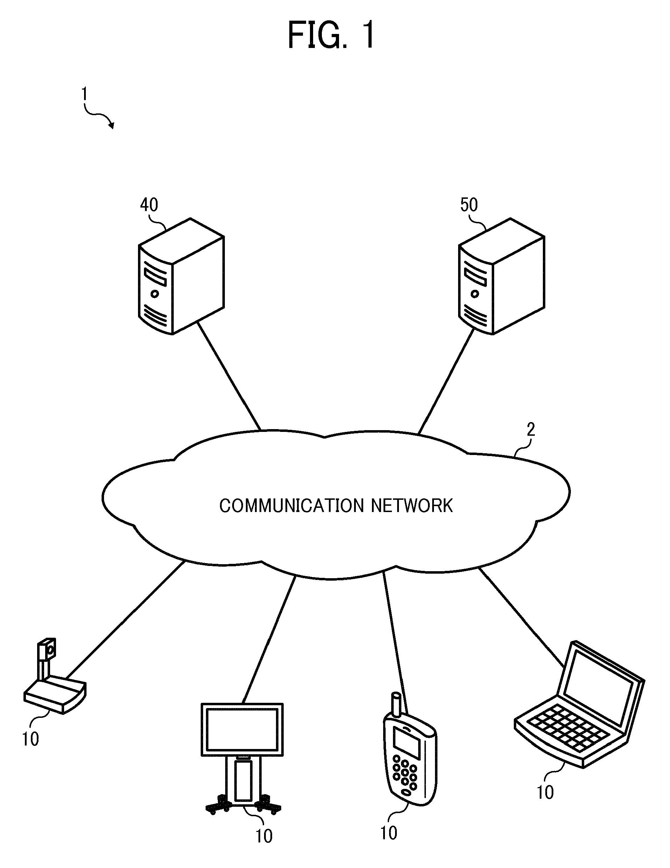

FIG. 1 is a schematic diagram illustrating a configuration of a communication system 1 according to the present embodiment. As illustrated in FIG. 1, the communication system 1 includes a communication terminal 10, an authentication server 40, and a management system 50. Hereinafter, the communication terminal 10 may be referred to simply as the terminal 10.

The management system 50 is a server that receives a message publication request and a message subscription request from clients in the publish-subscribe model. Such message publication requests and message subscription requests are used to exchange messages among clients. The publish-subscribe model may be referred to simply as a pub/sub model, and publication and subscription may be referred to simply as pub and sub, respectively. As a protocol compatible with the pub/sub model, for example, the management system 50 may be provided with a pub/sub extension (XEP-0060) of Message Queue Telemetry Transport (MQTT) or Extensible Messaging and Presence Protocol (XMPP).

The communication terminal 10 may be, for example, a general-purpose communication terminal, and may be installed with a desired client application. Alternatively, the communication terminal 10 may be, for example, a communication terminal that is designed for exclusive use, and may be installed with a specific client application that serves as a client. The communication terminal 10 is connected to the management system 50 through a communication network 2. Accordingly, the clients of the communication terminal 10 can request message pub and message sub from the management system 50. The communication terminal 10 maybe, for example, a television conference terminal, an electronic whiteboard, a digital signage, a telephone, a tablet personal computer (PC), a smartphone, a camera, and a PC.

The authentication server 40 is a server that authenticates a client, which is a client application operating on the communication terminal 10, and a user who uses that client, respectively, to authorize the use of the management system 50. In order to implement such authentication and authorization as above, the management system 50 is provided with an authenticating or authorizing protocol such as OAuth 2.0 or OpenID Connect.

For the purpose of simplification, cases in which each of the management system 50 and the authentication server 40 is a single device are described as above with reference to FIG. 1. However, no limitation is intended by such an embodiment. At least one of the management system 50 and the authentication server 40 may include a plurality of devices. Alternatively, the management system 50 and the authentication server 40 may be implemented by a single system or device. Moreover, for the purpose of simplification, cases in which the communication system 1 includes the four communication terminals 10 are described as above with reference to FIG. 1. However, no limitation is intended by such an embodiment. The number of the communication terminals 10 that are provided for the communication system 1 may be two, three, or five or more. The types of the communication terminals 10 may be similar to each other, or may be different from each other as illustrated in FIG. 1.

### «Hardware Configuration»

Next, the hardware configuration of each element of the communication system 1 is described.

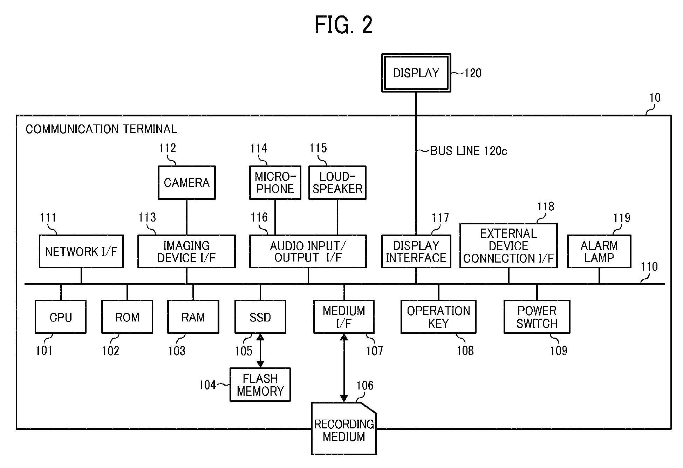

FIG. 2 is a schematic block diagram illustrating the hardware configuration of the communication terminal 10 according to the present embodiment. The hardware configuration of the communication terminal 10 is not limited to the hardware configuration illustrated in FIG. 2 as long as the communication terminal 10 is capable of performing communication. For example, the communication terminal 10 may include an additional element that is not illustrated in FIG. 2. Alternatively, some of the elements illustrated in FIG. 2 may be omitted. Moreover, some of the elements illustrated in FIG. 2 may be, for example, an external device that can be coupled to the communication terminal 10. As illustrated in FIG. 2, the communication terminal 10 according to the present embodiment includes a central processing unit (CPU) 101 that controls the overall operation of the communication terminal 10, a read-only memory (ROM) 102 that stores a control program used for operating the CPU 101 such as an initial program loader (IPL), a random access memory (RAM) 103 is mainly used as a work area in which the CPU 101 executes a program, a flash memory 104 that stores various kinds of data such as a communication control program for the communication terminal 10, image data, and audio data, a solid state disk (SSD) 105 that controls reading or writing of various kinds of data to or from the flash memory 104 under the control of the CPU 101, a medium interface (I/F) 107 that controls reading or writing of data with respect to a recording medium 106 such as a flash memory and an integrated circuit (IC) card, an operation key 108 that is operated by a user to input a user instruction such as a user selection of a destination of the communication from the communication terminal 10, a power switch 109 that turns on or turns off the power of the communication terminal 10, and a network interface (I/F) 111 that transmits data using the communication network 2.

Moreover, the communication terminal 10 includes a built-in camera 112 that captures a subject under the control of the CPU 101 to obtain the image data of the subject, an imaging device interface (I/F) 113 that controls the operation of the camera 112, a built-in microphone 114 that receives audio, a built-in loudspeaker 115 that outputs sound, an audio input and output (input/output) interface (I/F) 116 that controls the input and output of an audio signal between the microphone 114 and the loudspeaker 115 under the control of the CPU 101, a display interface 117 that transmits the image data to an external display 120 under the control of the CPU 101, an external device connection interface (I/F) 118 that connects the communication terminal 10 to various kinds of external devices, an alarm lamp 119 that provides notification of various kinds of functional abnormalities detected in the communication terminal 10, and a bus line 110 such as an address bus or a data bus that electrically connects various elements as above to each other as illustrated in FIG. 2.

The display 120 may be a liquid crystal or organic electroluminescence (EL) display that displays an image of a subject, an operation icon, or the like. The display 120 is connected to the display interface 117 via a cable 120c. The cable 120c may be an analog red green blue (RGB) (video graphic array (VGA)) signal cable, a component video cable, a high-definition multimedia interface (HDMI, registered trademark) signal cable, or a digital video interactive (DVI) signal cable.

The camera 112 includes a lens and a solid-state image sensing device that converts an image (video) of a subject into electronic data by converting light to electric charge. As the solid-state image sensing device, for example, a complementary metal-oxide-semiconductor (CMOS) or a charge-coupled device (CCD) is used.

To the external device connection interface 118, an external device such as an external camera, an external microphone, and an external loudspeaker can be electrically connected, through a Universal Serial Bus (USB) cable or the like that is inserted into a connection port of the housing of the communication terminal 10. In cases where an external camera is connected, the external camera is driven on a priority basis and the built-in camera 112 is not driven under the control of the CPU 101. In a similar manner to the above, in the case where an external microphone is connected or an external loudspeaker is connected, the external microphone or the external loudspeaker is driven under the control of the CPU 101 on a top-priority basis over the built-in microphone 114 or the built-in loudspeaker 115.

The recording medium 106 is removable from the communication terminal 10. In addition, a nonvolatile memory that reads or writes data under the control of the CPU 101 is not limited to the flash memory 104, and, for example, an electrically erasable and programmable read-only memory (EEPROM) may be used instead.

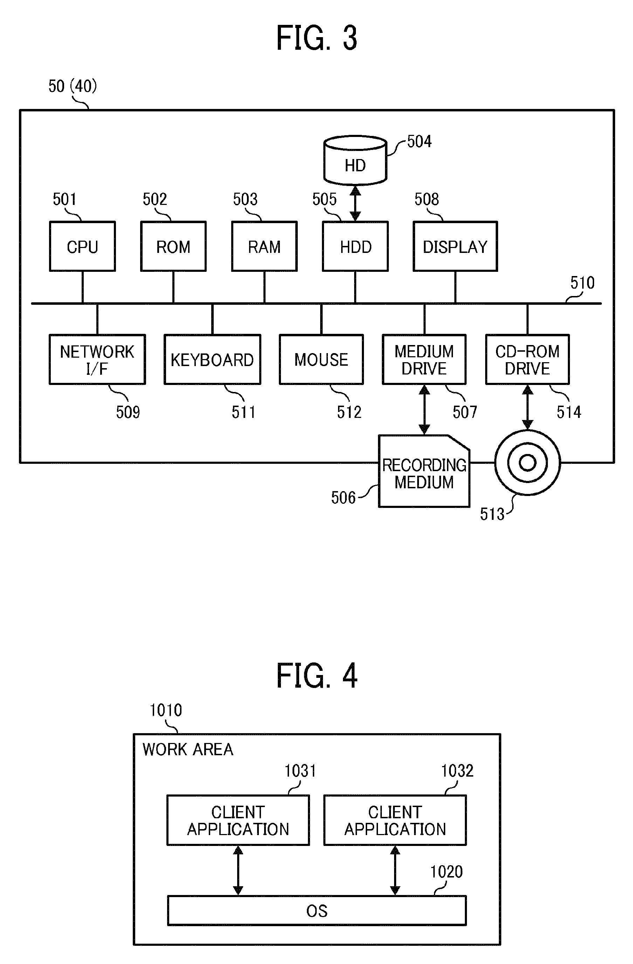

FIG. 3 is a schematic block diagram illustrating a hardware configuration of the management system 50 according to the present embodiment. The management system 50 according to the present embodiment includes a CPU 501 that controls the entire operation of the communication management system 50, a ROM 502 that stores a control program for controlling the CPU 501 such as the IPL, a RAM 503 that is used as a work area for the CPU 501, a hard disk (HD) 504 that stores various kinds of data such as a control program for the management system 50, a hard disk drive (HDD) 505 that controls reading or writing of various kinds of data to or from the HD 504 under control of the CPU 501, a medium drive 507 that controls reading or writing of data from and to a recording medium 506 such as a flash memory, a display 508 that displays various kinds of information such as a cursor, a menu, a window, a character, and an image, a network interface (I/F) 509 that performs data communication using the communication network 2, a keyboard 511 that is provided with a plurality of keys for allowing a user to input characters, numerical values, or various kinds of instructions, a mouse 512 for selecting or executing various kinds of instructions, selecting an object to be processed, or for moving a cursor, a compact disc read only memory (CD-ROM) drive 514 that reads or writes various kinds of data from and to a CD-ROM 513, which is one example of removable recording medium, and a bus line 510 such as an address bus or a data bus that electrically connects various elements as above to each other as illustrated in FIG. 3.

Note that the hardware configuration of the authentication server 40 illustrated in FIG. 1 is similar to that of the communication management system 50, and thus the description of the hardware configuration of the authentication server 40 is omitted.

### <Software Configuration of Communication Terminal>

FIG. 4 is a schematic block diagram illustrating a software configuration of the communication terminal 10 according to the present embodiment. As illustrated in FIG. 4, the communication terminal 10 is installed with an operating system (OS) 1020 and client applications 1031 and 1032, and these client applications 1031 and 1032 may be deployed on a work area 1010 of the RAM 103.

The OS 1020 is basic software that controls entire operation of the communication terminal 10 through providing basic functions. The client applications 1031 and 1032 request the authentication server 40 to perform authentication, and sends at least one of a pub request and a sub request to the management system 50.

In FIG. 4, the communication terminal 10 is installed with at least two client applications (for example, the client applications 1031 and 1032). However, no limitation is indicated thereby, and the communication terminal 10 may be installed with one or any number of client applications. Alternatively, any desired application may be executed on the OS 1020, and the client applications may operate in such an application.

### <Functional Configuration>

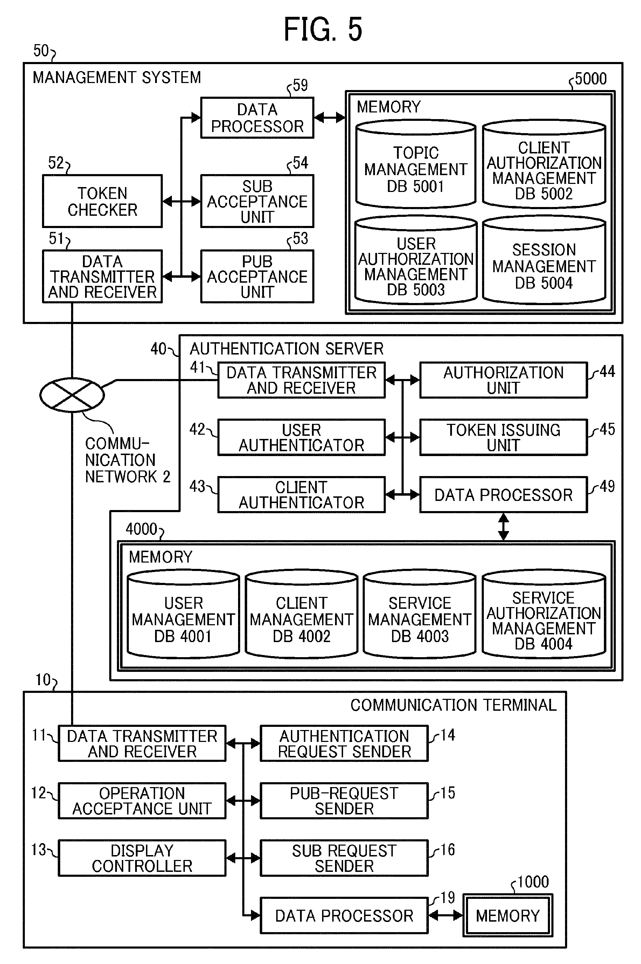

Next, the functional configuration according to the present embodiment is described. FIG. 5 is a functional block diagram of the communication terminal 10, the authentication server 40, and the management system 50, according to an embodiment of the present invention. Note that the communication terminal 10, the authentication server 40, and the management system 50 together configure a part of the communication system 1. In FIG. 5, the communication terminal 10, the authentication server 40, and the management system 50 are connected with each other so as to perform data communication through the communication network 2.

### <Functional Configuration of Communication Terminal>

The communication terminal 10 includes a data transmitter and receiver 11, an operation acceptance unit 12, a display controller 13, an authentication request sender 14, a publication (pub)-request sender 15, a subscription (sub)-request sender 16, and a data processor 19. These elements are functions that are implemented by the operation of some of the hardware components illustrated in FIG. 2 executed by the instructions from the CPU 101 in accordance with a control program expanded from the flash memory 104 onto the RAM 103. The communication terminal 10 further includes a memory 1000 configured by the ROM 102, the RAM 103, and the flash memory 104 illustrated in FIG. 2.

### <Detailed Functional Configuration of Communication Terminal>

Next, the functional configuration of the communication terminal 10 is described in detail with reference to FIG. 2 and FIG. 5. In the following description of the functional configuration of the communication terminal 10, the relation of the hardware elements in FIG. 2 with the functional configuration of the communication terminal 10 will also be described.

The data transmitter and receiver 11 is implemented by the instructions from the CPU 101 and the network interface 111, each of which is illustrated in FIG. 2, and transmits or receives various kinds of data (or information) to or from another communication terminal, apparatus, or system, through the communication network 2.

The acceptance unit 12 is implemented by the instructions from the CPU 101, the operation key 108, and the power switch 109, and receives various kinds of input or selection.

The display controller 13 is substantially implemented by the instructions from the CPU 101 illustrated in FIG. 2 and the display interface 117 illustrated in FIG. 2, and sends the image data that is sent from the counterpart terminal to the display 120 during the conversation.

The authentication request sender 14 is implemented by the instructions according to the client applications from the CPU 101 illustrated in FIG. 2, and requests the authentication server 40 to perform authentication. In cases where the communication terminal 10 is installed with a plurality of client applications, the authentication request sender 14 is generated for each one of the executed client applications in the communication terminal 10.

The pub-request sender 15 is implemented by the instructions according to the client applications from the CPU 101 illustrated in FIG. 2, and sends a pub request for a message to the management system 50. When the client application can deal with a sub but cannot deal with a pub, the pub-request sender 15 is not generated in the communication terminal 10. In cases where the communication terminal 10 is installed with a plurality of client applications that can deal with a pub, the pub-request sender 15 is generated for each one of the executed client applications in the communication terminal 10.

The sub-request sender 16 is implemented by the instructions according to the client applications from the CPU 101 illustrated in FIG. 2, and sends a sub request for a message to the management system 50. When the client application can deal with a pub but cannot deal with a sub, the sub-request sender 16 is not generated in the communication terminal 10. In cases where the communication terminal 10 is installed with a plurality of client applications that can deal with a sub, the sub-request sender 16 is generated for each one of the executed client applications in the communication terminal 10.

The data processor 19 is substantially implemented by the instructions from the CPU 101 and the SSD 105, each of which is illustrated in FIG. 2. The data processor 19 stores various types of data in the memory 1000 or read various types of data from the memory 1000. Note that the data processor 19 maybe implemented by the instructions from the CPU 101 only.

### <Functional Configuration of Authentication Server>

As illustrated in FIG. 5, the authentication server 40 includes a data transmitter and receiver 41, a user authenticator 42, a client authenticator 43, an authorization unit 44, a token issuing unit 45, and a data processor 49. These units are functions implemented by or caused to function by operating some of the elements illustrated in FIG. 3 under the control of the instructions from the CPU 501. Note also that such instructions from the CPU 501 are made in accordance with a program for the authentication server 40 expanded from the HD 504 to the RAM 503. The authentication server 40 also includes a memory 4000 that is configured by the HD 504 illustrated in FIG. 3.

### <User Management Table>

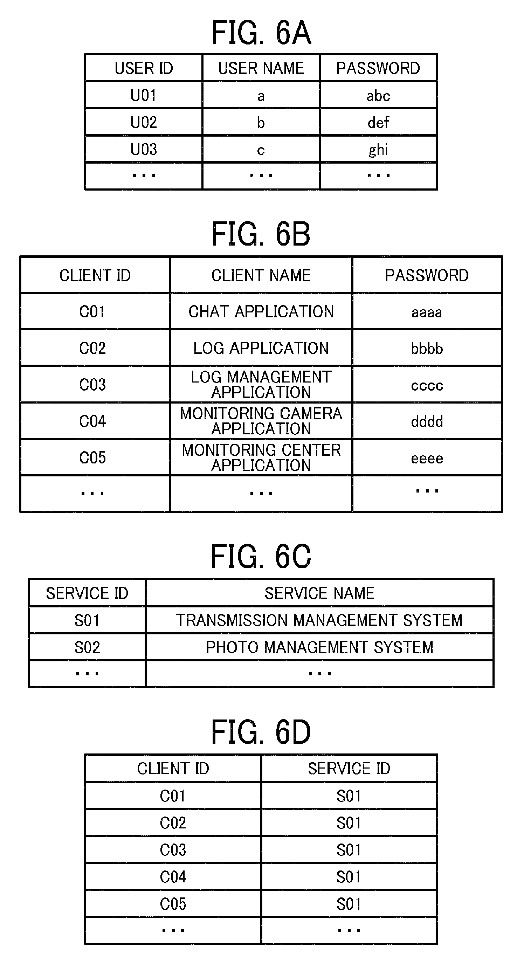

FIG. 6A is a diagram illustrating an example data structure of a user management table, according to the present embodiment. In the memory 4000, as illustrated in FIG. 5, a user management database (DB) 4001 that is made of a user management table is stored. The authentication management table stores, for each user ID (identifier, identification), the user name and the password in association with each other.

### <Client Management Table>

FIG. 6B is a diagram illustrating an example data structure of a client management table, according to the present embodiment. In the memory 4000, as illustrated in FIG. 5, a client management database (DB) 4002 that is made of a client management table is stored. The authentication management table stores, for each client ID, the client name and the password in association with each other.

A chat application illustrated in FIG. 6B is a client application that exchanges a message among a plurality of users. A log application illustrated in FIG. 6B is a client application that is used by the communication terminal 10 to request the management system 50 to publish the log of the communication terminal 10 as a message. A log management application illustrated in FIG. 6B is a client application that is used to request the management system 50 to subscribe to the log of the communication terminal 10 as a message. Note also that the log management application is not only a client application that is used to request the management system 50 to subscribe to the log but also is a server application that accepts a request for log management from the log application. A monitoring camera application illustrated in FIG. 6B is a client application that is used by the communication terminal 10 to request the management system 50 to publish the image data of captured images as a message. A monitoring center application illustrated in FIG. 6B is a client application that is used to request the management system 50 to subscribe to the image data of captured images as a message. Note also that the monitoring center application is not only a client application that is used to request the management system 50 to subscribe to the image data but also is a server application that accepts a request for the management of captured images from the monitoring camera application.

### <Service Management Table>

FIG. 6C is a diagram illustrating an example data structure of a service management table, according to the present embodiment. In the memory 4000, as illustrated in FIG. 5, a service management database (DB) 4003 that is made of a service management table is stored. The service management table stores the service name in association with each service ID. According to the present embodiment, the service "transmission management system" that is identified by service ID "S01" is the management system 50. The right of the management system 50 to use the functions of pub/sub is the resource. Note also that the pub/sub service with the use of the management system 50 serves as a scope of authorization in the protocol of OAuth 2.0. Note also that the management system 50 serves as a resource server.

### <Service Authorization Management Table>

FIG. 6D is a diagram illustrating an example data structure of a service authorization management table, according to the present embodiment. In the memory 4000, as illustrated in FIG. 5, a service authorization management database (DB) 4004 that is made of a service authorization management table is stored. The service authorization management table stores the service ID in association with each client ID. Accordingly, in the service authorization management table, what client can access what service can be managed. The service authorization management table illustrated in FIG. 6D indicates that the chat application identified by the client ID "C01" can access the transmission management system identified by the service ID "S01", i.e., the management system 50.

### <Detailed Functional Configuration of Authentication Server>

The data transmitter and receiver 41 is implemented by the instructions from the CPU 501 and the network interface 509, each of which is illustrated in FIG. 3, and transmits or receives various kinds of data (or information) to or from another communication terminal, apparatus, or system, through the communication network 2.

The user authenticator 42 is implemented by the instructions from the CPU 501 illustrated in FIG. 3, and performs user authentication in response to a request from a client.

The client authenticator 43 is implemented by the instructions from the CPU 501 illustrated in FIG. 3, and performs client authentication in response to a request from a client.

The authorization unit 44 is implemented by the instructions from the CPU 501 illustrated in FIG. 3, and performs authorization by specifying the access right of a client to service.

The token issuing unit 45 is implemented by the instructions from the CPU 501 illustrated in FIG. 3, and issues an authorizing token to be used in the service that a client wishes to access.

The data processor 49 is substantially implemented by the instructions from the CPU 501 and the HDD 505, each of which is illustrated in FIG. 3. The data processor 49 stores various types of data in the memory 4000 or read various types of data from the memory 4000. Note that the data processor 49 may be implemented by the instructions from the CPU 501 only.

### <Functional Configuration of Management System>

The management system 50 includes a data transmitter and receiver 51, a token checker 52, a pub acceptance unit 53, a sub acceptance unit 54, and a data processor 59. These units are functions implemented by or caused to function by operating some of the elements illustrated in FIG. 3 under the control of the instructions from the CPU 501. Note also that such instructions from the CPU 501 are made in accordance with a program for the management system 50 expanded from the HD 504 to the RAM 503. The management system 50 also includes a memory 5000 that is configured by the HD 504 illustrated in FIG. 3.

### <Topic Management Table>

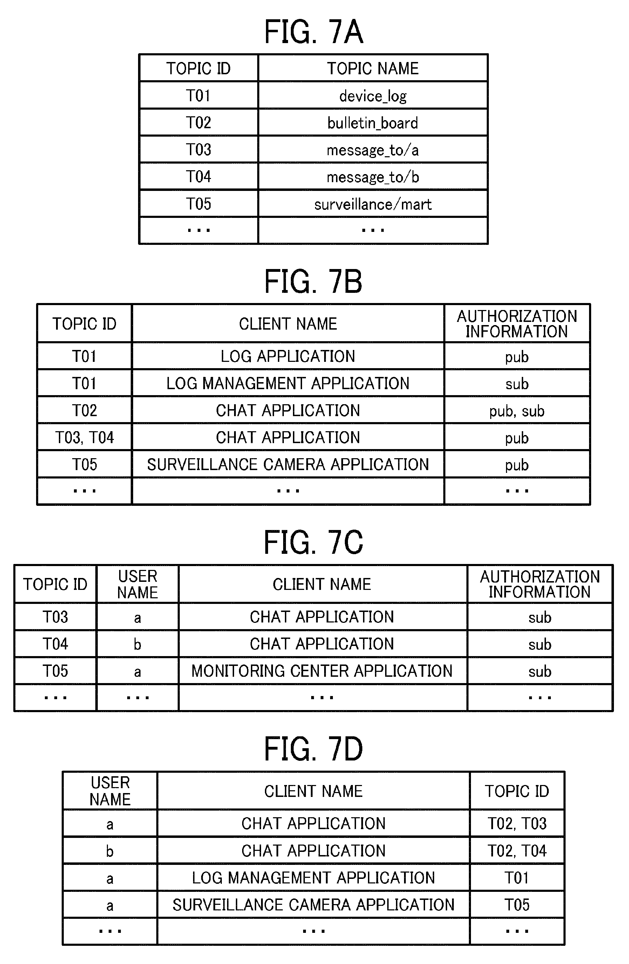

FIG. 7A is a diagram depicting a topic management table according to the present embodiment. In the memory 5000, as illustrated in FIG. 5, a topic management database (DB) 5001 that is made of a topic management table is stored. The topic management table stores the topic name in association with each topic ID. A topic is an attribute associated with a message. Once a client application specifies a topic and sends a sub request, the management system 50 sends a message that is published in association with the specified topic to the client application of the request sender.

### <Client Authorization Management Table>

FIG. 7B is a diagram illustrating an example data structure of a client authorization management table, according to the present embodiment. In the memory 5000, as illustrated in FIG. 5, a client authorization management database (DB) 5002 that is made of client authorization management table is stored. The client authorization management table stores, for each topic ID, the client name and the authorization information in association with each other. The authorization information indicates whether or not to have the right to publish or subscribe to.

The client authorization management table in FIG. 7B indicates that the log application has the authority to publish but does not have the authority to subscribe to a message that is associated with the topic "device_log" identified by the topic ID "T01". In a similar manner, the client authorization management table in FIG. 7B indicates that the log management application has the authority to subscribe to but does not have the authority to publish a message that is associated with the topic "device_log" identified by the topic ID "T01". The client authorization management table in FIG. 7B indicates that the chat application has the authority to publish and subscribe to a message that is associated with the topic "bulletin_board" identified by the topic ID "T02". Moreover, the client authorization management table in FIG. 7B indicates that the chat application has the authority to publish but does not have the authority to subscribe to a message that is associated with the topic "message_to/a" and "message_to/b" identified by the topic ID "T03 and T04".

A server such as the management system 50 that brokers a message from a client in the pub/sub model is referred to as a broker. For example, when the log management application and the chat application access a broker in the related art, the broker sends a message on a topic for the log management application to the chat application, or the broker sends a message on a topic for the chat application to the log management application. For this reason, a broker has to be provided for each client in the related art, and thus the extensibility was low. By contrast, the management system 50 according to the present embodiment is provided with the client authorization management table. Thus, even when a plurality of clients are connected to the management system 50, the management system 50 can send an appropriate message to each of the clients.

### <User Authorization Management Table>

FIG. 7C is a diagram illustrating an example data structure of a user authorization management table, according to the present embodiment. In the memory 5000, as illustrated in FIG. 5, a user authorization management database (DB) 5003 that is made of a user authorization management table is stored. The user authorization management table stores, for each topic ID, the user name, the client name, and the authorization information in association with each other. The authorization information indicates whether or not to have the right to publish or subscribe to. The user authorization management table in FIG. 7C indicates that the communication terminal 10 authenticated by the chat application to be the user "a" has the authority to subscribe to a message that is associated with the topic "message_to/a" identified by the topic ID "T03". Due to the use of the user authorization management table, only the chat application that the user "a" uses can subscribe to a message associated with the topic "message_to/a".

### <Session Management Table>

FIG. 7D is a diagram depicting a session management table according to the present embodiment. In the memory 5000, as illustrated in FIG. 5, a session management database (DB) 5004 that is made of a session management table is stored. The session management table stores the user name, the client name, and the topic ID in association with each other. The session management table indicates the user of each of the client applications that is being connected to the management system 50 as well as the topic ID of a message that is being subscribed to by the client application. Accordingly, the management system 50 can determine what message is to be sent to what client application when a message is received. For example, a request to publish a message associated with the topic "bulletin_board" identified by the topic ID "T02" is received, the management system 50
can determine that the message is to be sent to the chat application that the users a and b use and the message are not to be sent to the log management application or the monitoring camera application that the user "a" uses.

### <Detailed Functional Configuration of Management System>

Next, the functional configuration of the management system 50 is described in detail. In the following description of the functional configuration of the management system 50, the relation between the hardware configuration of FIG. 3 and the functional configuration of the management system 50 illustrated in FIG. 5 will also be described.

The data transmitter and receiver 51 is implemented by the instructions from the CPU 501 and the network interface 509, each of which is illustrated in FIG. 3, and transmits or receives various kinds of data (or information) to or from another communication terminal, apparatus, or system, through the communication network 2.

The token checker 52 is implemented by the instructions from the CPU 501 illustrated in FIG. 3, and checks an authorizing token included in the login request sent from the communication terminal 10.

The pub acceptance unit 53 is implemented by the instructions from the CPU 501 illustrated in FIG. 3, and receives a pub request from the client.

The sub acceptance unit 54 is implemented by the instructions from the CPU 501 illustrated in FIG. 3, and receives a sub request from the client.

The data processor 59 is substantially implemented by the instructions from the CPU 501 and the HDD 505, each of which is illustrated in FIG. 3. The data processor 59 stores various types of data in the memory 5000 or read various types of data from the memory 5000. Note that the data processor 59 may be implemented by the instructions from the CPU 501 only.

### <Operation>

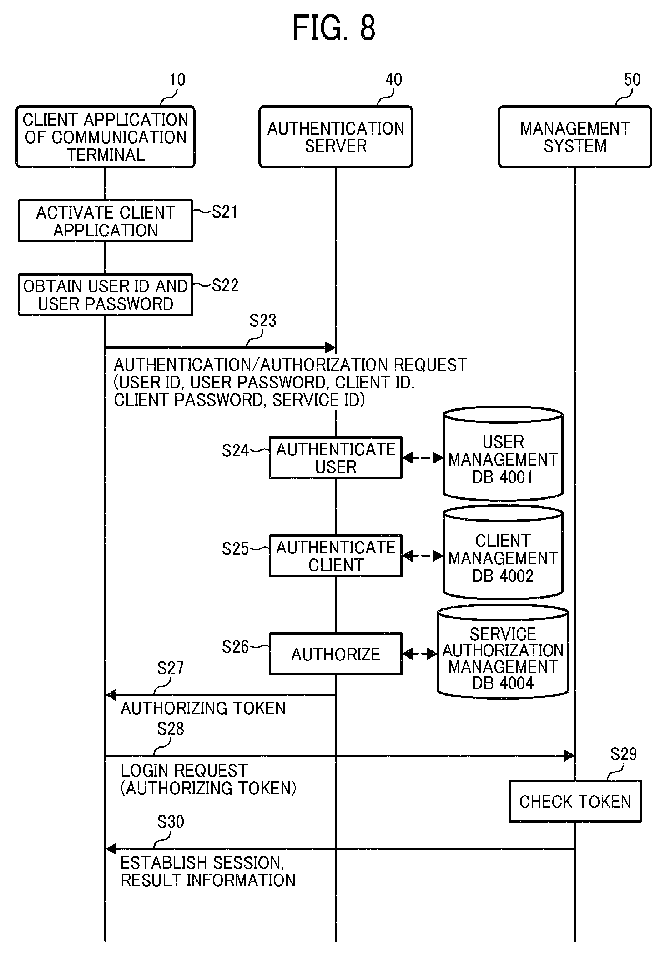

Next, the operation of the communication terminal 10, the authentication server 40, and the management system 50 that together configure the communication system 1 is described. Firstly, the authentication processes according to the present embodiment are described with reference to FIG. 8. FIG. 8 is a sequence diagram illustrating the authentication processes according to the present embodiment.

Once a desired client application that is installed in the communication terminal 10 is activated (step S21), the functional units that correspond to the activated client application start the following processes. The client application of the communication terminal 10 obtains user ID and a user password (step S22). No limitation is intended, but the obtaining method may be, for example, a method in which the operation acceptance unit 12 accepts an input of user ID and a password, and a method in which the data processor 19 reads user ID and a password that are stored in advance in the memory 1000.

The authentication request sender 14 of the communication terminal 10 sends an authentication/authorization request to the authentication server 40 through the data transmitter and receiver 11 (step S23). The authentication/authorization request includes a request to authenticate a user, a request to authenticate a client, and a request to authorize the use of service. The authentication request that is sent to the management system 50 includes the user ID and the user password obtained by the communication terminal 10, client ID and a client password of the activated client application, and service ID that serves as a scope indicating the service to be used. The client ID and the client password may be stored in advance in the memory 1000 and be read by the data processor 19. In the following description, cases in which the service ID included in the authentication request is "S01" that indicates the management system 50 are described.

The data transmitter and receiver 41 of the authentication server 40 receives an authentication request sent from the communication terminal 10. The user authenticator 42 of the authentication server 40 authenticates a user depending on whether or not a pair of the user ID and the user password included in the authentication request is stored in the user management table (see FIG. 6A) (step S24). When a pair of the user ID and the user password included in the authentication request is stored in the user management table, the user authenticator 42 successfully authenticates the user. When a pair of the user ID and the user password included in the authentication request is not stored in the user management table, the user authenticator 42 fails to authenticate the user.

The client authenticator 43 of the authentication server 40 authenticates a client depending on whether or not a pair of the client ID and the client password included in the authentication request is stored in the client management table (see FIG. 6B) (step S25). When a pair of the client ID and the client password included in the authentication request is stored in the client management table, the client authenticator 43 successfully authenticates the client. When a pair of the client ID and the client password included in the authentication request is not stored in the client management table, the client authenticator 43 fails to authenticate the client.

The authorization unit 44 of the authentication server 40 authorizes a requesting client to access the service depending on whether or not a pair of the client ID and the service ID included in the authentication request is stored in the service authorization management table (see FIG. 6D) (step S26). When a pair of the client ID and the service ID included in the authentication request is stored in the service authorization management table, the authorization unit 44 successfully authorizes the access. When a pair of the client ID and the service ID included in the authentication request is not stored in the service authorization management table, the authorization unit 44 fails to authorize the access. For example, when the chat application that the user "a" uses requests the use of the management system 50, the communication terminal 10 sends to the authentication server 40 the authentication request that includes the user ID "U01", the client ID "C01", and the service ID "S01". In this case, the pair of the client ID "C01" and the service ID "S01" included in the authentication request is stored in the service authorization management table, and thus the authorization unit 44 successfully authorizes the access.

When there is a failure in at least one of the user authentication, the client authentication, and the service authorization, the data transmitter and receiver 41 sends an error message indicating a failure in authentication or authorization to the request sender communication terminal 10.

When all the user authentication, the client authentication, and the service authorization are successful, the token issuing unit 45 of the authentication server 40 issues an authorizing token that indicates that the request sender communication terminal 10 can access the management system 50 (step S27). The authorizing token includes the user name, the client name, the service name that uses this authorizing token, the expiration date, or the like.

In the communication system 1, authentication and authorization can be performed with a protocol such as the OAuth 2.0 and the OpenID Connect. In such cases, a method of exchanging the authentication information such as user ID and a user password and the contents of the authorizing token are determined by the specification of a protocol such as the OAuth 2.0 and the OpenID Connect. In this configuration, the token may be a JSON Web Token (JWT). In order to ensure that the authorizing token is not tampered in the path, the token issuing unit 45 may digitally sign the authorizing token using a secret key. The secret key may be implemented using the RSA (Rivest, Shamir, and Adleman) cryptosystem. Note also that the digital signature may be implemented using a public key cryptography such as the hash-based message authentication code (HMAC). The management system 50 that uses the authorizing token checks the digital signature using a public key or a secret key depending on whether the authorizing token is digitally signed using a secret key or a public key. The digital signature may be implemented using a known standard, for example, the JSON Web Signature (JWS). The authorizing token may be encoded by using, for example, the JSON Web Encryption (JWE), where appropriate.

The data transmitter and receiver 41 incorporates the issued authorizing token into the authentication result, and sends the authentication result to the communication terminal 10. The data transmitter and receiver 11 of the communication terminal 10 receives from the authentication server the authentication result that includes the authorizing token. Subsequently, the data transmitter and receiver 11 of the communication terminal 10 sends the received authorizing token to the management system 50 to request login (step S28).

The data transmitter and receiver 51 of the communication management system 50 receives the login request sent from the communication terminal 10. The token checker 52 of the management system 50 checks an authorizing token included in the login request (step S29). In this case, the token checker 52 analyzes the authorizing token that is included in the login request according to the standard adopted in the communication system 1. The token checker 52 may determine whether the digital signature that is made by the authentication server is appropriate based on the result of the analysis. When the digital signature that is made by the authentication server is determined to be inappropriate, the token checker 523 determines that the authorizing token included in the login request has been tampered, and fails to authorize the login request.

Subsequently, the token checker 52 checks the expiration date included in the authorizing token to determine whether or not the expiration date of the authorizing token has expired. When the expiration date of the authorizing token is determined to have expired, the token checker 52 fails to authorize the login request due to the expiration of the authorizing token.

Subsequently, the token checker 52 checks whether or not the authorizing token includes the service name that corresponds to the management system 50. When the authorizing token is determined not to include the service name that corresponds to the management system 50, the token checker 52 fails to authorize the login request.

When the token checker 52 fails to authorize the login request due to the check processes of any one of the digital signature, expiration date, and the service name of the authorizing token, the data transmitter and receiver 51 sends to the communication terminal 10 authorization result information indicating that the authorization ended in failure. When the token checker 52 determines that the digital signature, expiration date, and the service name of the authorizing token are all valid, the use of the service by the user and the client specified in the authorizing token is authorized. Once the user and the client are authorized, the management system 50 establishes a session with the communication terminal 10 (step S30). In such cases, the management system 50 sends to the communication terminal 10 authorization result information indicating that the authorization was successful.

Once the session is established, the management system 50 stores in the memory 1000 the user name of the client, the client name, the IP address of the client, or the like included in the authorizing token in association with each other. Due to this configuration, the management system 50 can figure out the user name of the client (of the request sender) and the client name, without the client's sending the user name and the client name to the management system 50 every time the client sends data to the management system 50.

The processes in the steps S21 to S30 as above are performed for each of the client applications activated in the communication terminal 10. For example, the client applications such as the chat application and the log management application may use a shared user password or user ID to send an authentication request to the authentication server 40. When the management system 50 has successfully authenticated the client applications, a plurality of sessions are simultaneously established between the management system 50 and the client applications, respectively.

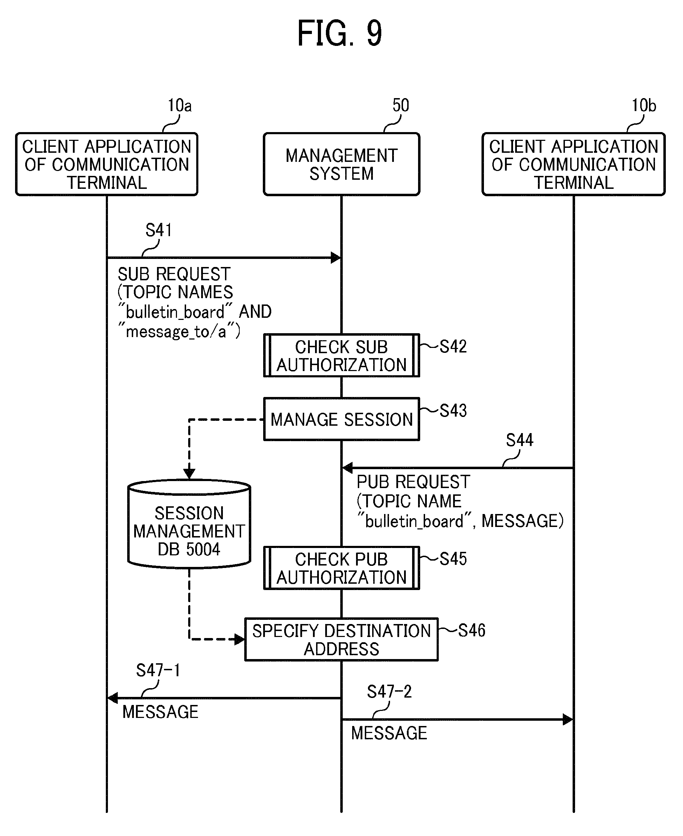

Next, the processes in which a message is published and subscribed to among the multiple communication terminals 10 are described with reference to FIG. 9. FIG. 9 is a sequence diagram illustrating the processes of publishing and subscribing to a message, according to the present embodiment. Hereinafter, the processes in which a message is published and subscribed to between the communication terminal 10a and the communication terminal 10b, which are examples of the multiple communication terminals 10, are described.

The following processes are to be performed after the management system 50 has successfully authenticated the user "a" and the client application "chat application" and the authentication result information is sent from the management system 50 to the communication terminal 10a. The sub-request sender 16 of the communication terminal 10a sends a sub request to the management system 50 in order for the user "a" to receive a message written in a bulletin board and a message addressed to the communication terminal 10a (step S41). The sub request includes the topic name "bulletin_board" related to a bulletin board and the topic name "message_to/a" related to a message addressed to the user "a".

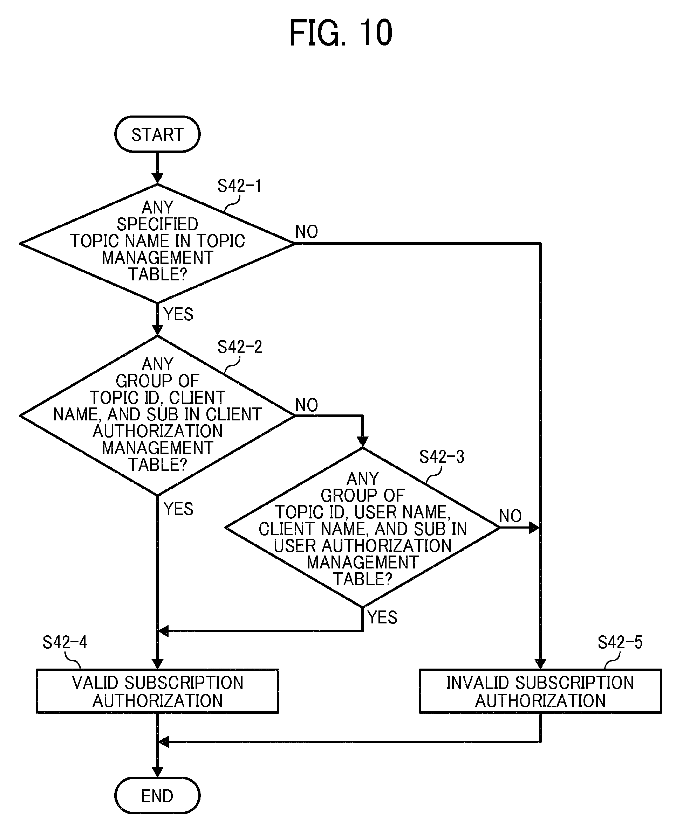

The data transmitter and receiver 51 of the communication management system 50 receives the sub request sent by the chat application of the communication terminal 10a. The sub acceptance unit 54 of the management system 50 determines whether or not the chat application of the communication terminal 10a has the authority to be subscribed to a message related to the sub request (step S42). With reference to FIG. 10, the processes in the step S42 are described in detail. FIG. 10 is a flowchart of the processes of determining whether or not each communication terminal has the authority to subscribe to a message, according to the present embodiment.

Firstly, the sub acceptance unit 54 determines whether or not each topic name included in the sub request is stored in the topic management table (see FIG. 7A) (step S42-1). When it is determined that the topic name included in the sub request is not stored in the topic management table ("NO" in the step S42-1), the sub acceptance unit 54 determines that the sub-request sender does not have the authority to subscribe to the topic specified in sub request (step S42-5).

When it is determined that the topic name included in the sub request is stored in the topic management table ("YES" in the step S42-1), the sub acceptance unit 54 determines, for each topic name included in sub request, whether or not a group of the topic ID, the client name of the sub-request sender, and the authorization information "sub" is stored in the client authorization management table (step S42-2). Note that the authorization information "sub" indicates the presence of sub authorization. In regard to the topic name "bulletin_board" included in sub request, sub acceptance unit 54 determines that the group of the topic ID "T02" of "bulletin_board", the client name "chat application" of the pub-request sender, and the authorization information "sub" indicating the presence of sub authorization is stored in the client authorization management table ("YES" in the step S42-2). In regard to the topic name "message_to/a" included in sub request, sub acceptance unit 54 determines that the group of the topic ID "T03" of "message_to/a", the client name "chat application" of the pub-request sender, and the authorization information "sub" indicating the presence of sub authorization is not stored in the client authorization management table ("NO" in the step S42-2). When it is determined to be "NO" in the step S42-2, the sub acceptance unit 54 determines whether or not a group of the topic ID of a topic included in the sub request, the user name of the sub-request sender, the client name of the sub-request sender, and the authorization information "sub" is stored in the user authorization management table (step S42-3). Note that the authorization information "sub" indicates the presence of sub authorization. In regard to the topic name "message_to/a" included in sub request, sub acceptance unit 54 determines that the group of the topic ID "T03" of "message_to/a", the user name "a" of sub-request sender, the client name "chat application" of the pub-request sender, and the authorization information "sub" indicating the presence of sub authorization is stored in the user authorization management table ("YES" in the step S42-3).

When it is determined to be "NO" in the step S42-3, the sub acceptance unit 54 determines that the sub-request sender does not have the authority to subscribe to the topic specified in sub request (step S42-5).

On the other hand, when it is determined to be "YES" in the steps S42-2 or S42-3, the sub acceptance unit 54 determines that the chat application of the sub-request sender has the authority to subscribe to the topics "bulletin_board" and "message_to/a" specified in sub request (step S42-4). In this case, sub acceptance unit 54 registers the user name "a" of sub-request sender, the client name "chat application", the topic ID "T2" and "T3" of the topics "bulletin_board" and "message_to/a" in association with the session management table (see FIG. 7D) (step S43).

The data transmitter and receiver 51 of the management system 50 may transmit information about the permission or rejection of the sub request to the communication terminal 10a based on the result of the determination made in the steps S42-4 and S42-5.

The processes in the steps S41 to S43 as above are performed for each of the client applications activated in the communication terminal 10. For example, when the user "a" starts the chat application and the log management application on the communication terminal 10a, each of the chat application and the log management application can send a sub request to the management system 50. Once the sub requests from the chat application and the log management application are permitted, the client ID indicating the chat application or the log management application, and the topic ID that corresponds to the request from each of the client applications are associated with the user name in common and stored in the session management table (see FIG. 7D).

The following processes are to be performed after the management system 50 has successfully authenticated the user "b" and the client application "chat application" and the authentication result information is sent from the management system 50 to the communication terminal 10b. Once the operation acceptance unit 12 of the communication terminal 10b receives a message for bulletin board "hello" input by the user "b", the pub-request sender 16 sends a pub request to the management system 50 (step S44). The pub request includes the topic name "bulletin_board" related to a bulletin board and the received message "helllo".

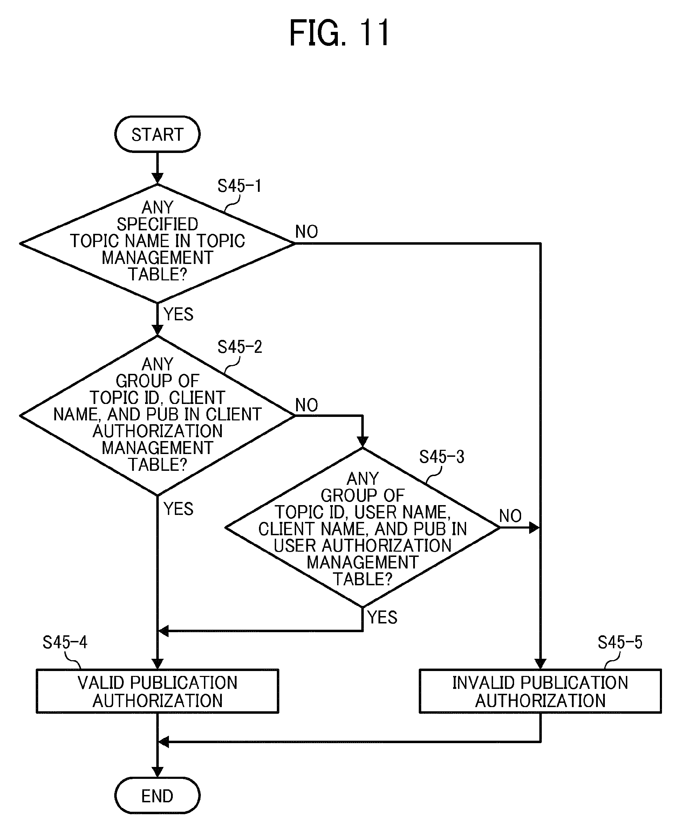

The data transmitter and receiver 51 of the communication management system 50 receives the pub request sent by the chat application of the communication terminal 10b. The pub acceptance unit 53 of the management system 50 determines whether or not the chat application of the communication terminal 10b has the authority to publish a message on the topic related to the pub request (step S45). With reference to FIG. 11, the processes in the step S45 are described in detail. FIG. 11 is a flowchart of the processes of determining whether or not each communication terminal has the authority to publish a message, according to the present embodiment.

Firstly, the pub acceptance unit 53 determines whether or not each topic name included in the pub request is stored in the topic management table (see FIG. 7A) (step S45-1). When it is determined that the topic name included in the pub request is not stored in the topic management table ("NO" in the step S45-1), the pub acceptance unit 53 determines that the pub-request sender does not have the authority to subscribe to the topic specified in pub request (step S45-5).

When it is determined that the topic name included in the pub request is stored in the topic management table ("YES" in the step S45-1), the pub acceptance unit 53 determines, for each topic name included in pub request, whether or not a group of the topic ID, the client name of the pub-request sender, and the authorization information "pub" is stored in the client authorization management table (step S45-2). Note that the authorization information "pub" indicates the presence of pub authorization. In regard to the topic name "bulletin_board" included in the pub request, the pub acceptance unit 53 determines that the group of the topic ID "T02" of "bulletin_board", the client name "chat application" of the pub-request sender, and the authorization information "pub" indicating the presence of pub authorization is stored in the client authorization management table ("YES" in the step S45-2). When it is determined to be "NO" in the step S45-2, the pub acceptance unit 53 determines whether or not a group of the topic ID of a topic included in the pub request, the user name of the pub-request sender, the client name of the sub-request sender, and the authorization information "pub" indicating the presence of pub authorization is stored in the user authorization management table (step S45-3).

When it is determined to be "NO" in the step S45-3, the pub acceptance unit 53 determines that the pub-request sender does not have the authority to subscribe to the topic specified in pub request (step S45-5).

On the other hand, when it is determined to be "YES" in the steps S45-2 or S45-3, the pub acceptance unit 53 determines that the pub-request sender has the authority to subscribe to the topic "bulletin_board" specified in pub request (step S45-4).

The data transmitter and receiver 51 of the management system 50 may transmit information about the permission or rejection of the pub request to the communication terminal 10b based on the result of the determination made in the steps S45-4 and S45-5.

On the other hand, when it is determined to be "YES" in the steps S45-2 or S45-3, the pub acceptance unit 53 searches the session management table using the topic ID "T02" of "bulletin_board" included in the message that is permitted to be published as a search key, and obtains a pair of the corresponding user name and client name, i.e., ("a", chat application) and ("b", chat application) (step S46). Accordingly, the pub acceptance unit 53 can specify the chat application in use by the user "a" and the chat application in use by the user "b" as the destination to which a message is to be sent.

The data transmitter and receiver 51 sends the message requested to publish to which the request sender has been added, i.e., a message "hello (fromb)" to the specified destinations, i.e., the chat application in use by the user "a" of the communication terminal 10a and the chat application in use by the user "b" of the communication terminal 10b. When each of the chat application and the log management application of the communication terminal 10a is connected to the management system 50, the management system 50 uses the session with the chat application of the communication terminal 10a to send a message. Accordingly, the log management application can be prevented from receiving a message for a chat application.

The management system 50 may store a message related to the pub request in the memory 5000. By so doing, when a client that is not connected to the management system 50 at the time of pub request is later connected to the management system 50, the management system 50 can send a message stored in the memory 5000 to that client.

The processes in the steps S44 to S47-1 and S47-2 as above are performed for each of the client applications activated in the communication terminal 10b. In other words, when a client application and a user are authenticated in the management system 50, a pub request for a message can be made for every client application that the user uses.

### «Modification of Example Embodiment»

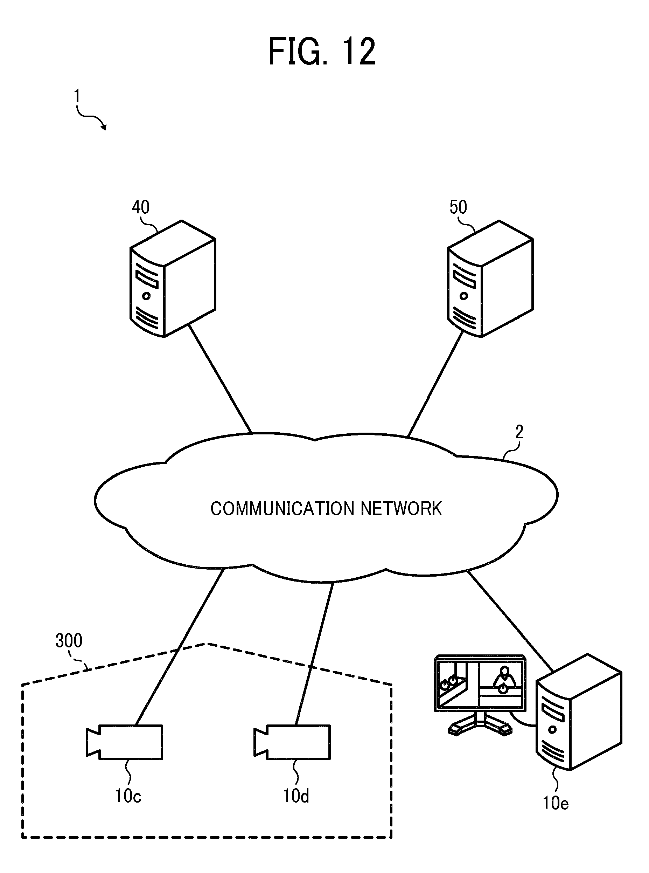

Next, a modification of the embodiments of the present invention is described. In particular, differences in configuration from the embodiments as described above are described. FIG. 12 is a schematic diagram illustrating a configuration of a communication system according to a modification of the example embodiment of the present invention. In the present modification, the communication terminals 10c, 10d, and 10e are connected to each other such that these communication terminals can communicate with each other and with other devices through the communication network 2. Note that each of the communication terminals 10c and 10d according to the present modification is a monitoring camera with a communication capability. The communication terminals 10c and 10d may be installed in the same store 300. Note also that the communication terminal 10e is a general-purpose personal computer (PC).

Each of the communication terminals 10c and 10d is installed with a monitoring camera application as a client application. In a similar manner to the processes in the steps S21 to S30, the monitoring camera application of each of the communication terminals 10c and 10d uses the authority of a common user "a" to send an authentication/authorization request to the authentication server 40. As a result, each of the communication terminals 10c and 10d establishes a session with the management system 50.

The communication terminal 10e is installed with a monitoring center application as a client application. In a similar manner to the processes in the steps S21 to S30, the monitoring center application of the communication terminal 10e uses the authority of the common user "a" to send an authentication/authorization request to the authentication server 40. As a result, the communication terminal 10e establishes a session with the management system 50.

In a similar manner to the processes in the steps S41 to S43, the monitoring center application of the communication terminal 10e sends a sub request for the topic "surveillance/mart" to the management system 50, and the sub request is authorized by the management system 50. In a similar manner to the processes in the step S44, the monitoring camera application of each of the communication terminals 10c and 10d sends a pub request for the topic "surveillance/mart" to the management system 50. However, the processes herein are different from those in the embodiments described above as follows. Each of the monitoring camera applications sends the image data of an image captured by the local communication terminal to the management system 50 as a message related to the topic "surveillance/mart". The management system 50 authorizes the pub requests of the monitoring camera applications of the communication terminals 10c and 10d in a similar manner to the processes in the step S45. Further, the management system 50 specifies the destination of a message to be the monitoring center application of the communication terminal 10e that the user "a" uses, in a similar manner to the processes in the step S46. Accordingly, the management system 50 sends the message (image data) received from the monitoring camera applications of the communication terminals 10c and 10d to the monitoring center application of the communication terminal 10e, in a similar manner to the processes in the step S47-1. Note also that the monitoring camera application of each of the communication terminals 10c and 10d may send a pub request for the topic "surveillance/mart" to the management system 50 on a regular basis (for example, every 5 seconds). Accordingly, the monitoring center application of the communication terminal 10e can receive the image data of the captured images as a message at regular time intervals. Thus, the monitoring center application can achieve remote monitoring of the store 300.

Next, some effects of the above example embodiments of the present invention are described. With the transmission control method according to the embodiments described above, the data transmitter and receiver 51 of the management system 50 serves as a receiver, and receives information of a predetermined attribute. Note that the attribute indicates, for example, a topic that specifies the information to be subscribed to in a publish-subscribe model. Note also that the information specified by a topic indicates, for example, a message or image data that can be published or subscribed to in a pub/sub model. When a predetermined attribute is associated with a certain client in the client authorization management DB 5002, the pub acceptance unit 53 and the sub acceptance unit 54 of the management system 50 control the data transmitter and receiver 51 to send the information received by the data transmitter and receiver 51 to the communication terminal 10 that is authenticated by the certain client. Note that the pub acceptance unit 53 and the sub acceptance unit 54 serve as a controller, and the control performed by the pub acceptance unit 53 and the sub acceptance unit 54 is an example of a step of controlling. When a predetermined attribute is associated with both a certain account and a certain client in the user authorization management DB 5003, the pub acceptance unit 53 and the sub acceptance unit 54 (i.e., an example of a controller) of the management system 50 control the data transmitter and receiver 51 to send the information received by the data transmitter and receiver 51 to the communication terminal 10 that is authenticated by both the certain account and the certain client. Note the control performed herein by the pub acceptance unit 53 and the sub acceptance unit 54 is an example of a step of controlling. When a predetermined attribute is not associated with both a certain account and a certain client in the user authorization management DB 5003, the pub acceptance unit 53 and the sub acceptance unit 54 of the management system 50 control the data transmitter and receiver 51 not to send the information received by the data transmitter and receiver 51 to the communication terminal 10 that is authenticated by both the certain account and the certain client. Note the control performed herein by the pub acceptance unit 53 and the sub acceptance unit 54 is an example of a step of controlling. Note that an account indicates an authority to use a service, and for example, user ID may be used as an account. According to the embodiments described above, even when a plurality of clients are connected to the management system 50, appropriate information can be subscribed to on a client-by-client basis or on a client and account by client and account basis.

The client authorization management DB 5002 of the management system 50 stores identification information of the client and attribute information indicating the attribute in association with each other. Note that the client authorization management DB 5002 serves as a manager. When a certain account is associated with the attribute information indicating a predetermined attribute in the client authorization management DB 5002, the pub acceptance unit 53 and the sub acceptance unit 54 control the data transmitter and receiver 51 to send the information received by the data transmitter and receiver 51 to the communication terminal 10 that is authenticated by the certain client. The user authorization management DB 5003 of the management system 50 stores an account, client identification information, and the attribute information indicating an attribute in association with each other. When a certain account, the information identifying a certain client, and the attribute information indicating a predetermined attribute are associated with each other in the user authorization management DB 5003, the pub acceptance unit 53 and the sub acceptance unit 54 control the data transmitter and receiver 51 to send the information received by the data transmitter and receiver 51 to the communication terminal 10 that is authenticated by the certain client. As described above, in the management system 50, client identification information and an attribute are associated with each other in advance, or an account, client identification information, and the attribute information indicating an attribute are associated with each other in advance. Accordingly, the pub acceptance unit 53 and the sub acceptance unit 54 can determine whether or not to send information.

The data transmitter and receiver 41 of the authentication server 40 accepts an authentication request from a certain client and a certain account. Note that the reception performed herein is an example of a step of receiving, and the authentication server 40 and the data transmitter and receiver 41 serve as an authentication system and a receiver, respectively. The user authenticator 42 of the authentication server 40 authenticates the certain account. The client authenticator 43 of the authentication server 40 authenticates the certain account. Note that the authentication performed herein is an example of a step of authenticating, and the client authenticator 43 serves as an authentication processing unit. By so doing, when a certain account and a certain client are authenticated, the management system 50 can control specified information to be subscribed to.

The token issuing unit 45 of the authentication server 40 issues an authorizing token when the user authenticator 42 authenticates a certain account and the client authenticator 43 authenticates a certain client. Note that the token issuing unit 45 serves as an issuing unit. The management system 50 authorizes the use of service based on an authorizing token issued by the token issuing unit 45. Accordingly, the security can be ensured even when the management system 50 and the authentication server 40 are separate devices.

Further, the control programs for the communication terminal 10, the authentication server 40, and the management system 50 may be recorded in a file in a format installable or executable on a computer-readable recording medium such as the recording medium 106 for distribution. Examples of the recording medium include, but not limited to, a compact disc-recordable (CD-R), a digital versatile disk (DVD), and a Blu-ray disc.

Note also that a recording medium such as a CD-ROM storing the programs according to the example embodiment as described above or the HD 504 storing these programs may be distributed as a program product at home and abroad.

The communication terminal 10, the authentication server 40, and the management system 50 according to the embodiment as described above may be configured by a single computer or a plurality of computers to which functions or units are allocated as desired in a divided manner. Alternatively, the authentication server 40 and the management system 50 may be implemented by a single computer (one or more processors).

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

## Claims

1. A management system (50) comprising:
a receiver (51, 501, 509) configured to receive information of a predetermined attribute; and
a controller (53, 54, 501) configured to control the information received by the receiver (51, 501, 509) to be sent to a communication terminal (10) that is authenticated by a client when the predetermined attribute is associated with the client.

2. The management system (50) according to claim 1, wherein
when the predetermined attribute is associated with both an account and the client, the controller (53, 54, 501) controls the information received by the receiver (51, 501, 509) to be sent to the communication terminal (10) that is authenticated by the account and the client, and
when the predetermined attribute is not associated with both the account and the client, the controller (53, 54, 501) controls the information received by the receiver (51, 501, 509) not to be sent to the communication terminal (10) that is authenticated by the account and the client.

3. The management system (50) according to claim 1, further comprising
a manager (5002) configured to store identification information of the client and attribute information indicating the predetermined attribute in association with each other,
wherein when the identification information of the client is associated with the attribute information indicating the predetermined attribute in the manager (5002), the controller (53, 54, 501) controls the information received by the receiver (51, 501, 509) to be sent.

4. A communication system (1) comprising:
an authentication system (40) comprising
an acceptance unit (41, 501, 509) configured to accept an authentication request from a client, and
an authentication processing unit (43, 501) configured to authenticate the client; and
the management system (50) according to claim 1 to communicate with the authentication system (40) through a communication network.

5. The communication system (1) according to claim 4, wherein
the authentication system (40) includes an issuing unit (45, 501) configured to issue an authorizing token when the client is authenticated by the authentication processing unit (43, 501), and
the management system (50) authorizes an use of service based on the authorizing token issued by the issuing unit (45, 501).

6. A method of controlling transmission, the method comprising:
accepting (41) an authentication request from a client;
authenticating (43) the client;
receiving (51) information of a predetermined attribute; and
controlling (53, 54) the information received by the receiving (51) to be sent to a communication terminal (10) that is authenticated with a client by the authenticating (43) when the predetermined attribute is associated with the client.
